(19) Europäisches Patentamt
European Patent Office
Office européen des brevets

(11) EP 3 620 309 A1

(12) # EUROPEAN PATENT APPLICATION
published in accordance with Art. 153(4) EPC

(43) Date of publication:
**11.03.2020 Bulletin 2020/11**

(21) Application number: **18794152.1**

(22) Date of filing: **01.05.2018**

(51) Int Cl.:
***B60C 11/00*** *(2006.01)* ***B60C 1/00*** *(2006.01)*
***C08K 3/36*** *(2006.01)* ***C08L 9/06*** *(2006.01)*
***C08L 15/00*** *(2006.01)*

(86) International application number:
**PCT/JP2018/017441**

(87) International publication number:
**WO 2018/203557 (08.11.2018 Gazette 2018/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.05.2017 JP 2017091824**

(71) Applicant: **Bridgestone Corporation**
**Tokyo 104-8340 (JP)**

(72) Inventor: **MIYAMOTO, Yukari**
**Tokyo 104-8340 (JP)**

(74) Representative: **Oxley, Robin John George**
**Marks & Clerk LLP**
**15 Fetter Lane**
**London EC4A 1BW (GB)**

(54) **TIRE FOR TWO-WHEELED VEHICLE**

(57) The tire for two-wheel vehicles of the present invention includes a pair of bead sections, a pair of side wall sections, and a tread section continuing to both the side wall sections, the tread section being divided into three by a center section and shoulder sections, wherein a tread rubber of the center section and a tread rubber of the shoulder sections each contain a rubber component and satisfy formula (1) shown below. The tire for two-wheel vehicles of the present invention achieves both wet grip performance and abrasion resistance of the tread.

(Dynamic modulus E' at 0°C of tread rubber of center section) / (Dynamic modulus E' at 0°C of tread rubber of shoulder sections) < 0.7 (1)

[Fig. 1]

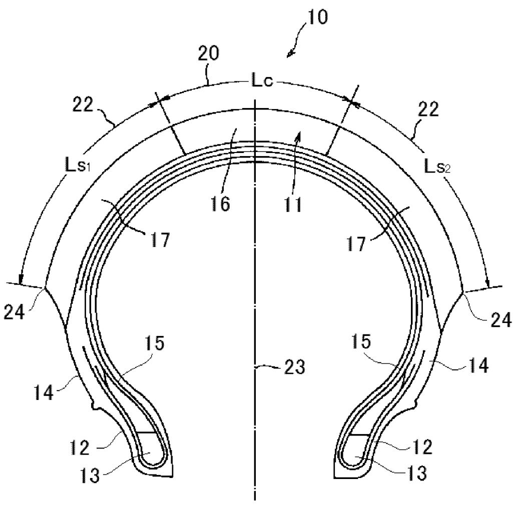


EP 3 620 309 A1

## Description

TECHNICAL FIELD

The present invention relates to a tire for two-wheel vehicles.

BACKGROUND ART

Tires for two-wheel vehicles are requested to have high grip performance, because the inclination of the equatorial plane of the tire with respect to the road surface becomes large when the vehicle corners. In addition, the grip performance is roughly divided into two, and improvement of dry grip performance (steering stability on dry road surfaces) and wet grip performance (braking performance on wet road surfaces) are mainly being studied.

In addition, tires for two-wheel vehicles are also required to have high abrasion resistance because the load per unit area is large.

In the motorcycle tires, since the vehicle body of the motorcycle is substantially upright with respect to the road surface during straight travel, the center section of the tire tread section then mainly contacts the road surface. On the other hand, since the vehicle body of the motorcycle is inclined with respect to the road surface during turning travel, the shoulder section of the tire tread section then mainly contacts the road surface.

Conventionally, as a tire for a motorcycle that achieves both the performance required for straight travel and the performance requested for turning travel as described above to some extent, the tire in which the tread is divided into three in the tire width direction and two types of tread rubbers are used has been developed.

For example, in order to enhance the high-speed durability of a pneumatic tire for a motorcycle, it is proposed that a pneumatic tire to be mounted on a motorcycle in which the tangential force coefficient is 1.1 or more, the tire including a pair of bead sections with a bead core embedded therein, a pair of side wall sections extending from the bead sections outwardly in the tire radial direction, and a tread section extending across the side wall sections, wherein the tread section is divided into three sections so as to have a center area including a tire equatorial plane and two shoulder areas located across the center area, and tan $\delta$/E' which is the ratio of the loss tangent tan $\delta$ to the dynamic modulus E' at 60°C in at least the center area is in a range of from 0.025 to 0.075 (for example, see PTL 1).

CITATION LIST

PATENT LITERATURE

PTL 1: JP-A 2006-273240

SUMMARY OF INVENTION

TECHNICAL PROBLEM

However, in the tire described in PTL 1, both the wet grip performance and the abrasion resistance cannot be achieved at high levels.

It is an object of the present invention to provide a tire for two-wheel vehicles having a tread that achieves both the wet grip performance and the abrasion resistance.

SOLUTION TO PROBLEM

The present inventors have made extensive studies to achieve the above object, and as a result, have found that both the wet grip performance and the abrasion resistance can be achieved at high levels, by using a divided tread which is divided into a center section and two shoulder sections sandwiching the center section as a tread of a tire for two-wheel vehicles and by making the dynamic modulus at 0°C of a tread rubber of the center section lower than the dynamic modulus at 0°C of a tread rubber of the shoulder sections by a specific ratio. The present invention has been completed on the basis of the findings.

Namely, the present invention is the followings:

<1> A tire for two-wheel vehicles, including
a pair of bead sections,
a pair of side wall sections, and
a tread section continuing to both the side wall sections, the tread section being divided in the tire width direction

into three by a center section including a tire equatorial plane and a pair of shoulder sections each including a tread end, wherein
a tread rubber of the center section and a tread rubber of the shoulder sections each contain a rubber component, and satisfy the following formula (1):

$$\text{(Dynamic modulus E' at 0°C of tread rubber of center section) / (Dynamic modulus E' at 0°C of tread rubber of shoulder sections)} < 0.70 \qquad (1).$$

<2> The tire for two-wheel vehicles according to <1>, wherein

the tread rubber of the center section and the tread rubber of the shoulder sections each contain a styrene-butadiene-based rubber as the rubber component, and
the weight average molecular weight of the styrene-butadiene-based rubber contained in the tread rubber of the center section is larger than the weight average molecular weight of the styrene-butadiene-based rubber contained in the tread rubber of the shoulder sections.

<3> The tire for two-wheel vehicles according to <1> or <2>, wherein the tread rubber of the center section and the tread rubber of the shoulder sections satisfy the following formula (2):

$$0.2 \leq \text{(Dynamic modulus E' at 0°C of tread rubber of center section) / (Dynamic modulus E' at 0°C of tread rubber of shoulder sections)} < 0.70 \qquad (2).$$

<4> The tire for two-wheel vehicles according to any one of <1> to <3>, wherein the tread rubber of the center section and the tread rubber of the shoulder sections each contain a modified conjugated diene-based polymer in an amount of 10% by mass or more as the rubber component.
<5> The tire for two-wheel vehicles according to <4>, wherein the content of the modified conjugated diene-based polymer in the tread rubber of the center section is larger than the content of the modified conjugated diene-based polymer in the tread rubber of the shoulder sections.
<6> The tire for two-wheel vehicles according to any one of <1> to <5>, wherein the tread rubber of the center section and the tread rubber of the shoulder sections each further contain a filler that contains 80% by mass or more of silica in an amount of 70 parts by mass or more relative to 100 parts by mass of the rubber component.
<7> The tire for two-wheel vehicles according to any one of <1> to <6>, wherein the dynamic modulus E' at 0°C of the tread rubber of the center section is from 40 to 120 MPa.
<8> The tire for two-wheel vehicles according to any one of <2> to <7>, wherein the weight average molecular weight of the styrene-butadiene-based rubber contained in the tread rubber of the center section is 1,070,000 or more.

ADVANTAGEOUS EFFECTS OF INVENTION

According to the present invention, there can be provided a tire for two-wheel vehicles having a tread that achieves both the wet grip performance and the abrasion resistance.

BRIEF DESCRIPTION OF DRAWINGS

Fig. 1 is a schematic sectional view showing an example of the tire for two-wheel vehicles of the present invention.
Fig. 2 is a schematic sectional view showing another example of the tire for two-wheel vehicles of the present invention.
Fig. 3 is an inward-direction sectional view (a partially-enlarged view) of a particle of hydrated silicic acid.
Fig. 4 is a mercury intrusion-discharge curve (schematic view) in hydrated silicic acid obtained from a measurement using a mercury porosimeter based on a mercury intrusion method. The vertical axis represents the differential mercury intrusion (-dV/d(log d)) in a mercury intrusion curve C, and represents the differential mercury discharge (-dV/d(log d)) in a mercury discharge curve D. V means the mercury intrusion (cc) in the mercury intrusion curve C, and means the mercury discharge (cc) in the mercury discharge curve D. d means the opening diameter (nm) in

pores of the hydrated silicic acid. The horizontal axis represents the d (nm).

DESCRIPTION OF EMBODIMENTS

The tire for two-wheel vehicles of the present invention includes a pair of bead sections, a pair of side wall sections, and a tread section continuing to both the side wall sections, the tread section being divided in the tire width direction into three by a center section including a tire equatorial plane and a pair of shoulder sections each including a tread end, wherein a tread rubber of the center section and a tread rubber of the shoulder sections each contain a rubber component, and satisfy the following formula (1):

$$\text{(Dynamic modulus E' at 0°C of tread rubber of center section) / (Dynamic modulus E' at 0°C of tread rubber of shoulder sections)} < 0.70 \qquad (1).$$

Hereinafter, the dynamic modulus E' at 0°C of the tread rubber of the center section is sometimes referred to as "$E'_{CL}$", and the dynamic modulus E' at 0°C of the tread rubber of the shoulder sections is sometimes referred to as "$E'_{Sho}$". In addition, "(Dynamic modulus E' at 0°C of tread rubber of center section) / (Dynamic modulus E' at 0°C of tread rubber of shoulder sections)" is sometimes referred to as simply "E' ratio" or "$E'_{CL/Sho}$".
The tire for two-wheel vehicles is not limited, and it may be a front tire or a rear tire, but in the present invention, the effect of the present invention is easy to develop particularly when applied to a rear tire since it is then possible to achieve both the high wet grip performance and the high abrasion resistance of the tread.
The two-wheel vehicle is not limited and any two-wheel vehicle can be appropriately selected according to the object, and examples thereof include a competition motorcycle, a general public roadway motorcycle, an on-road motorcycle, and an off-road motorcycle. Among them, as a two-wheel vehicle in which the effect of the present invention is particularly easy to develop, a general public roadway motorcycle and an on-road motorcycle are preferred, and a general public roadway motorcycle is more preferred.

<Structure of tire>

The tire for two-wheel vehicles of the present invention includes a pair of bead sections, a pair of side wall sections, and a tread section continuing to both the side wall sections, the tread section being divided in the tire width direction into three by a center section including a tire equatorial plane and a pair of shoulder sections each including a tread end.
The present invention will be described below with reference to drawings.
Fig. 1 is a schematic view showing an example of a cross section in the width direction of the tire for two-wheel vehicles of the present invention.
In Fig. 1, a tire for two-wheel vehicles 10 includes a pair of bead sections 12, a pair of side wall sections 14, and a tread section 11 continuing to both the side wall sections 14. The tread section 11 is divided in the tire width direction into three by a center section 20 including a tire equatorial plane 23 and a pair of shoulder sections 22 each including a tread end 24.
Each bead section 12 usually has a bead core 13, and one or more carcass layers 15 extend in a toroidal shape between a pair of bead cores 13. The carcass layer 15 is formed by coating a plurality of carcass cords with a rubber.
The side wall sections 14 extend outwardly in the tire radial direction from the bead sections 12 on the side faces of the tire for two-wheel vehicles to reinforce and protect the side faces.
The tread section 11 extends across the two side wall sections 14.
In the present invention, the tread section 11 is a divided tread which is divided into the center section 20 and the two shoulder sections 22 sandwiching the center section 20. In the divided tread, the tread section 11 is divided into three by the center section 20 including the tire equatorial plane 23 and the pair of shoulder sections 22 including the tread end 24. The tire equator 23 is the latitude line of the tire passing through the center in the tire width direction, and the surface in the tire circumferential direction including the tire equator is referred to as the tire equatorial plane.
In the center section 20, more specifically, the curvilinear length (Lc) in the width direction of the surface of the tread section is preferably 30 to 60% of the maximum length ($L_T = L_C + L_{S1} + L_{S2}$) of the curvilinear length in the width direction of the entire surface area of the tread section, and is more preferably 40 to 50%. When the curvilinear length ($L_C$) in the width direction of the surface of the tread section is 30% or more of the maximum length ($L_T$) of the curvilinear length in the width direction of the entire surface area of the tread section, the abrasion resistance can be ensured, and when the curvilinear length (Lc) is 60% or less, the deterioration of the wet grip performance is suppressed. A curvilinear length (Lc) in the width direction of the surface of the tread section which is 40 to 50% of the maximum length ($L_T$) of

the curvilinear length in the width direction of the entire surface area of the tread section is advantageous in terms of excellent balance of the wet grip performance and the abrasion resistance.

The curvilinear length ($L_S$ which is shown as $L_{S1}$ and $L_{S2}$ in Fig. 1) in the width direction of the surface of the tread section of the shoulder section 22 may be different between one shoulder section 22 ($L_{S1}$) and the other shoulder section 22 ($L_{S2}$), but usually, $L_{S1}$ and $L_{S2}$ are preferably the same, that is, the curvilinear length in the width direction of the shoulder section (one side) is preferably $[(L_T-L_C)/2]$.

A rubber constituting the tread section is referred to as a tread rubber, and a rubber constituting the shoulder sections is referred to as a "tread rubber of the shoulder sections" or simply a "shoulder rubber". In addition, a rubber constituting the center section is referred to as a "tread rubber of the center section" or simply a "center rubber".

A rubber composition constituting a tread rubber before vulcanization is referred to as a rubber composition for a tread. Namely, a rubber obtained by vulcanizing a rubber composition for a tread is a tread rubber.

In Fig. 1, the tread rubber is composed of a center rubber 16 and a shoulder rubber 17.

Fig. 2 is a schematic view showing another example of a cross section in the width direction of the tire for two-wheel vehicles of the present invention. The same numerals and signs as in Fig. 1 mean similar elements. In Fig. 2, the tread section 11 is divided in the width direction into three by the center section 20 including the tire equatorial plane 23 and the pair of shoulder sections 22 including the tread end 24. In Fig. 2, the center rubber 16 functions as a base rubber 18 in the shoulder sections 22, and the shoulder rubbers 17 are provided on the base rubbers 18 in the shoulder sections 22.

<Tread Rubber>

As for the tread rubbers in the present invention, the tread rubber in the center section and the tread rubber in the shoulder sections satisfy the formula (1).

$$\text{(Dynamic modulus E' at 0°C of tread rubber of center section) / (Dynamic modulus E' at 0°C of tread rubber of shoulder sections)} < 0.70 \quad (1)$$

That is, the E' ratio is less than 0.70.

Conventionally, as a technique for improving the wet grip performance, increasing tan $\delta$ of the tire by increasing the filler content in the rubber composition has generally been employed. However, when the filler content is increased, the workability in kneading of the rubber composition and the like tends to deteriorate. When the filler content is increased, the abrasion resistance of the tire also tends to deteriorate. It has thus been difficult to simultaneously achieve the abrasion resistance and the wet grip performance.

In contrast, the present invention focused on the softness of rubbers, and has found a technique of using the dynamic modulus E' as a measure thereof and making the dynamic modulus at 0°C of the tread rubber of the center section lower than the dynamic modulus at 0°C of the tread rubber of the shoulder sections by a specific ratio.

A lower E', which means a softer rubber, allows for the tread rubber of the center section to follow a road surface more easily, which enhances the biting property of the rubber against the road surface, and thus being presumed to improve the wet grip performance. On the other hand, in the shoulder area, it is presumed that maintenance of the E' at a high level leads to maintenance of the rigidity of the entire tread, resulting in improvement of the abrasion resistance.

Presumably for this reason, the tire for two-wheel vehicles of the present invention can achieve both the wet grip performance and the abrasion resistance of the tread.

From the viewpoint of further increasing the wet grip performance without impairing the abrasion resistance of the tire of the present invention, the tread rubber of the center section and the tread rubber of the shoulder sections preferably satisfy the formula (2):

$$0.2 \leq \text{(Dynamic modulus E' at 0°C of tread rubber of center section) / (Dynamic modulus E' at 0°C of tread rubber of shoulder sections)} < 0.70 \quad (2)$$

That is, the E' ratio is preferably 0.2 or more and less than 0.70.

From the viewpoint of the abrasion resistance of the tire and the viewpoint of the wet grip performance of the tire, the E' ratio is preferably as follows.

From the viewpoint of further increasing the wet grip performance of the tire of the present invention, the E' ratio is preferably 0.68 or less, more preferably 0.60 or less, and further preferably 0.50 or less. On the other hand, from

the viewpoint of not impairing the abrasion resistance of the tire of the present invention, the E' ratio is preferably 0.20 or more, more preferably 0.30 or more, and further preferably 0.40 or more.

Furthermore, for further increasing the wet grip performance of the tire of the present invention and further not impairing the abrasion resistance thereof, the dynamic modulus E' at 0°C of the tread rubber of the center section ($E'_{CL}$) is preferably 40 to 120 MPa, more preferably 45 to 100 MPa, and further preferably 64 to 100 MPa.

As for the tread rubber of the center section and the tread rubber of the shoulder sections in the present invention, the composition of each tread rubber is not limited as long as the E' ratio is lower than 0.70. However, from the viewpoint of easily achieving both the wet grip performance and the abrasion resistance, it is preferred to incorporate a rubber component containing a styrene-butadiene-based rubber and/or a filler containing silica into each of the center rubber and the shoulder rubber.

The components constituting the tread rubbers will be described below.

[Rubber Component]

As described above, the tread rubber of the center section and the tread rubber of the shoulder sections in the present invention preferably each contain a styrene-butadiene-based rubber (SBR) as a rubber component. Furthermore, when a filler containing silica is contained in the tread rubbers from the viewpoint of the abrasion resistance, a modified conjugated diene-based polymer is preferably contained in each of the center rubber and the shoulder rubber from the viewpoint of enhancing dispersibility of silica in the tread rubber to improve the abrasion resistance.

The rubber component may contain other rubber than such a styrene-butadiene-based rubber and a modified conjugated diene-based polymer, and examples thereof include natural rubbers (NR), butadiene rubbers (BR), acrylonitrile-butadiene-based rubbers, chloroprene rubbers, and mixtures thereof.

"The tread rubber of the center section and the tread rubber of the shoulder sections each contain an SBR as a rubber component" means that a unvulcanized rubber composition contains an SBR as a rubber component, which means that the rubber composition becomes contain a crosslinked SBR through vulcanization, and the same is applied to other rubber components, such as a modified conjugated diene-based polymer.

(Styrene-butadiene-based rubber)

As for the styrene-butadiene-based rubber, from the viewpoint of making the center rubber resistant to abrasion, the weight average molecular weight of the styrene-butadiene-based rubber contained in the center rubber is preferably larger than the weight average molecular weight of the styrene-butadiene-based rubber contained in the shoulder rubber. Such a configuration can achieve reduction of the dynamic modulus while not impairing the abrasion resistance.

Specifically, it is preferred that the weight average molecular weight of the styrene-butadiene-based rubber contained in the center rubber ($M_{WCL}$) is 1,070,000 or more while the weight average molecular weight of the styrene-butadiene-based rubber contained in the shoulder rubber ($Mw_{Sho}$) is less than 1,070,000. A styrene-butadiene-based rubber having a weight average molecular weight of 1,070,000 or more is hereinafter sometimes referred to as a "high molecular weight styrene-butadiene-based rubber" or a "high molecular weight SBR".

From the viewpoint of enhancing the abrasion resistance of the center rubber, $Mw_{CL}$ is more preferably 1,100,000 or more, and from the viewpoint of not impairing the wet grip performance of the center rubber, $Mw_{CL}$ is preferably 1,250,000 or less.

In the center rubber, from the viewpoint of the strength of the center rubber, the content of the styrene-butadiene-based rubber in the rubber component is preferably 50% by mass or more, more preferably 60% by mass or more, and further preferably 70% by mass or more.

In the shoulder rubber, from the viewpoint of the strength of the center rubber, the content of the styrene-butadiene-based rubber in the rubber component is preferably 50% by mass or more, more preferably 70% by mass or more, and further preferably 80% by mass or more.

The content of the styrene-butadiene-based rubber in the center rubber is preferably lower than the content of the styrene-butadiene-based rubber in the shoulder rubber.

When $(A_C/A_S) < 1.0$ is satisfied wherein $A_C$ is the content of the styrene-butadiene-based rubber in the center rubber and As is the content of the styrene-butadiene-based rubber in the shoulder rubber, it is possible to achieve both the wet grip performance and the abrasion resistance at higher levels.

$(A_C/A_S)$ preferably exceeds 0.5 from the viewpoint of the balance between the wet grip performance and the abrasion resistance of the center section and the shoulder sections. Namely, $0.5 < (A_C/A_S) < 1.0$ is preferably satisfied. $0.6 < (A_C/A_S) < 0.9$ is more preferably satisfied.

(Modified conjugated diene-based polymer)

A modified conjugated diene-based polymer is preferably contained in each of the rubber component of the center rubber and the rubber component of the shoulder rubber.
Furthermore, the rubber component preferably mainly contains a mixture of a styrene-butadiene-based rubber and a modified conjugated diene-based polymer. Specifically, in the rubber component, the amount of the mixture of a styrene-butadiene-based rubber and a modified conjugated diene-based polymer is preferably 70% by mass or more, more preferably 80% by mass or more, further preferably 90% by mass or more, and particularly preferably 100% by mass or more.
In each of the center rubber and the shoulder rubber, the content of the modified conjugated diene-based polymer in the rubber component is preferably 10% by mass or more. When the content of the modified conjugated diene-based polymer in the rubber component is 10% by mass or more, the dispersibility of the filler (particularly silica) in the rubber component is superior to secure the abrasion resistance. From the viewpoints of the strength and the wet grip performance of the center rubber and the shoulder rubber, the content of the modified conjugated diene-based polymer in the rubber component of each tread rubber is preferably 50% by mass or less.
In the center rubber, the content of the modified conjugated diene-based polymer in the rubber component is more preferably 10 to 50% by mass, and further preferably 20 to 40% by mass.
In the shoulder rubber, the content of the modified conjugated diene-based polymer in the rubber component is more preferably 30% by mass or less, and further preferably 20% by mass or less.
In a tire for two-wheel vehicles, since the abrasion resistance is required more strongly in the center rubber than in the shoulder rubber, the content of the modified conjugated diene-based polymer in the center rubber is preferably larger than the content of the modified conjugated diene-based polymer in the shoulder rubber.
The molecular composition of the modified conjugated diene-based polymer will be described in detail below.
The modified conjugated diene-based polymer is a conjugated diene-based polymer having a modifying functional group.
First, the conjugated diene-based polymer will be described.

[Conjugated diene-based polymer]

In the present specification, the conjugated diene-based polymer means a homopolymer of a conjugated diene compound or a copolymer of a conjugated diene compound and a non-conjugated diene compound (a polymerizable compound other than the conjugated diene compound which can be polymerized with the conjugated diene compound). The polymer may be polymerized by anionic polymerization or polymerized by coordination polymerization.
A monomer of the conjugated diene compound is not limited and any monomer may be appropriately selected according to the purpose. Examples thereof include non-cyclic monomers, such as 1,3-butadiene, isoprene, 1,3-pentadiene, 2,3-dimethyl-1,3-butadiene, 1,3-hexadiene, and chloroprene. These may be used singly or in combination of two or more.
The non-conjugated diene compound is not limited and any non-conjugated diene compound may be appropriately selected according to the purpose. Examples thereof include non-cyclic monomers, such as ethylene, propylene, 1-butene, 1-pentene, 1-hexene, 1-heptene, and 1-octene; and aromatic vinyl monomers, such as styrene, $\alpha$-methylstyrene, p-methylstyrene, vinyltoluene, and vinyl naphthalene. These may be used singly or in combination of two or more.
Among the modified conjugated diene-based polymers, a modified polybutadiene is preferred from the viewpoint of the abrasion resistance.

[Modifying functional group]

The modifying functional group is not limited and any modifying functional group may be appropriately selected according to the purpose. The modifying functional group for the modified conjugated diene-based polymer preferably contains at least one atom selected from the group consisting of a nitrogen atom, a silicon atom, a tin atom, and an oxygen atom.
Examples thereof include modifying functional groups containing a nitrogen atom, modifying functional groups containing a silicon atom, modifying functional groups containing an oxygen atom, and modifying functional groups containing a tin atom. These may be used singly or in combination of two or more.
Among them, modifying functional groups containing a nitrogen atom, modifying functional group containing a silicon atom, and modifying functional group containing an oxygen atom are preferred in that they can provide favorable abrasion resistance, high reinforcing properties, and high elasticity because the interaction between the conjugated diene-based polymer and the filler, such as silica and carbon black is strengthened.
The method for introducing a modifying functional group is not limited and any method may be appropriately

selected depending on the purpose. Examples thereof include a method including use of a functional group-containing polymerization initiator, a method including copolymerizing a functional group-containing monomer with another compound, and a method including allowing a modifying agent to react on polymerization terminals of a conjugated diene-based polymer. These methods may be performed singly or in combination of two or more.

- Modifying functional group containing a nitrogen atom -

The modifying functional group containing a nitrogen atom is not limited and any one may be appropriately selected depending on the purpose. Examples thereof include substituted amino groups represented by the following general formula (I) and cyclic amino groups represented by the following general formula (II).

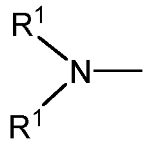

(I)

In the formula, $R^1$ is an alkyl group, a cycloalkyl group, or an aralkyl group having from 1 to 12 carbon atoms. Here, the alkyl group is preferably a methyl group, an ethyl group, a butyl group, an octyl group, or an isobutyl group, the cycloalkyl group is preferably a cyclohexyl group, and the aralkyl group is preferably a 3-phenyl-1-propyl group. Each $R^1$ may be the same or different.

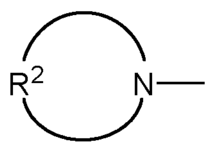

(II)

In the formula, $R^2$ is an alkylene group, a substituted alkylene group, an oxy-alkylene group, or an N-alkylamino-alkylene group having from 3 to 16 methylene groups. Here, the substituted alkylene group includes monosubstituted to octasubstituted alkylene groups, and examples of substituents include a linear or branched chain alkyl group, a cycloalkyl group, a bicycloalkyl group, an aryl group, and an aralkyl group which have from 1 to 12 carbon atoms. Here, the alkylene group is preferably a trimethylene group, a tetramethylene group, a hexamethylene group, or a dodecamethylene group, the substituted alkylene group is preferably a hexadecamethylene group, the oxyalkylene group is preferably an oxydiethylene group, and the N-alkylamino-alkylene group is preferably an N-alkylazadiethylene group.

The cyclic amino group represented by the general formula (II) is not limited and any one may be appropriately selected depending on the purpose. Examples thereof include groups obtained by eliminating a hydrogen atom that binds to a nitrogen atom from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-en, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, and 1,5,5-trimethyl-3-azabicyclo[4.4.0]decane. These may be used singly or in combination of two or more.

- Modifying functional group containing a silicon atom -

The modifying functional group containing a silicon atom is not limited and any one may be appropriately selected depending on the purpose. Examples thereof include modifying functional groups having a silicon-carbon bond that are formed by using a coupling agent represented by the following general formula (III).

Such modifying functional groups are preferred in that they allow the modified conjugated diene-based polymer to chemically bond with silicon via a silicon-carbon bond to increase the affinity between the rubber composition and the filler, thereby imparting favorable abrasion resistance and high reinforcing properties to the rubber composition.

Silicon is generally inferior in, for example, reinforcing properties for the rubber composition due to its low affinity to polymers when merely mixed into a rubber composition. However, when a modified conjugated diene-based polymer is chemically bound to silicon via a silicon-carbon bond, the affinity between the rubber composition and the filler can be enhanced to thereby impart favorable abrasion resistance and high reinforcing properties to the rubber composition.

$(R^3)_aZ(R^4)_b$ (III)

In the formula, Z is silicon, $R^3$s are each independently selected from the group consisting of an alkyl group having from 1 to 20 carbon atoms, a cycloalkyl group having from 3 to 20 carbon atoms, an aryl group having from 6 to 20 carbon atoms, and an aralkyl group having from 7 to 20 carbon atoms, $R^4$s are each independently chlorine or bromine, a is from 0 to 3, b is from 1 to 4, and a + b = 4. Here, the alkyl group is preferably a methyl group, an ethyl group, an n-butyl group, an n-octyl group, and 2-ethylhexyl, the cycloalkyl group is preferably a cyclohexyl group, the aryl group is preferably a phenyl group, and the aralkyl group is preferably a neophyl group. Each $R^3$ may be the same or different. Each $R^4$ may be the same or different.

The coupling agent containing silicon is not limited and any one may be appropriately selected depending on the purpose. Examples thereof include hydrocarbyloxysilane compounds, $SiCl_4$ (silicon tetrachloride), $(R^3)SiCl_3$, $(R^3)_2SiCl_2$, and $(R^3)_3SiCl$.

Among them, hydrocarbyloxysilane compounds are preferred from the viewpoint of having a high affinity to silica.

(Hydrocarbyloxysilane Compound)

The hydrocarbyloxysilane compound is not limited and any hydrocarbyloxysilane compound may be appropriately selected depending on the purpose. Examples thereof include hydrocarbyloxysilane compounds represented by the following general formula (IV).

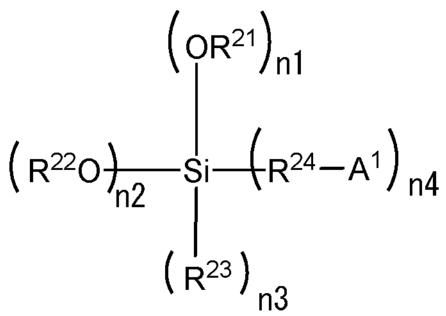

(IV)

In the formula, n1 + n2 + n3 + n4 = 4, (wherein n2 is an integer from 1 to 4 and n1, n3, and n4 each are an integer of from 0 to 3), and $A^1$ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group: the same shall apply hereinafter), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate ester group, a (thio)carboxylate ester metal salt, a carboxylic acid anhydride residue, a carboxylic acid halide compound residue, and a hydrolysable group-containing primary or secondary amino group or mercapto group. When n4 is 2 or more, then $A^1$s may be the same or different, $A^1$ may be a divalent group that bonds to Si to form a cyclic structure. $R^{21}$ represents a monovalent aliphatic or alicyclic hydrocarbon group having from 1 to 20 carbon atoms, or a monovalent aromatic hydrocarbon group having from 6 to 18 carbon atoms. When n1 is 2 or more, then $R^{21}$s may be the same or different. $R^{23}$ represents a monovalent aliphatic or alicyclic hydrocarbon group having from 1 to 20 carbon atoms, a monovalent aromatic hydrocarbon group having from 6 to 18 carbon atoms, or a halogen atom (fluorine, chlorine, bromine, iodine). When n3 is 2 or more, then $R^{23}$s may be the same or different. $R^{22}$ represents a monovalent aliphatic or alicyclic hydrocarbon group having from 1 to 20 carbon atoms or a monovalent aromatic hydrocarbon group having from 6 to 18 carbon atoms, each of which optionally has a nitrogen atom and/or a silicon atom. When n2 is 2 or more, then $R^{22}$s may be the same or different, or may bond to each other to form a ring. $R^{24}$ represents a divalent aliphatic or alicyclic hydrocarbon group having from 1 to 20 carbon atoms, or a divalent aromatic hydrocarbon group having from 6 to 18 carbon atoms. When n4 is 2 or more, then $R^{24}$s may be the same or different. The hydrolysable groups in the hydrolysable group-containing primary or secondary amino group or the hydrolysable group-containing mercapto group are preferably a trimethylsilyl group or a tert-butyldimethylsilyl group, and particularly preferably a trimethylsilyl group. In the present specification, "monovalent aliphatic or alicyclic hydrocarbon group having from 1 to 20 carbon atoms" means "monovalent aliphatic hydrocarbon group having from 1 to 20 carbon atoms or monovalent alicyclic hydrocarbon group having from 3 to 20 carbon atoms". The same shall apply to the divalent hydrocarbon group.

More preferably, the hydrocarbyloxysilane compound represented by the general formula (IV) is a hydrocarbyloxysilane compound represented by the following general formula (V).

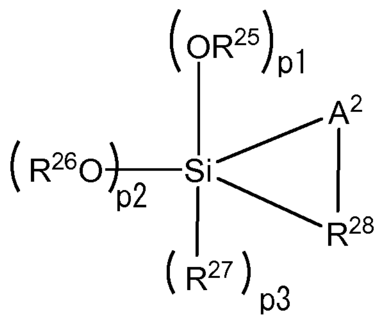

(V)

In the formula, p1 + p2 + p3 = 2 (wherein p2 is an integer of from 1 to 2, and p1 and p3 each are an integer of from 0 to 1); $A^2$ represents NRa (wherein Ra represents a monovalent hydrocarbon group, a hydrolysable group, or a nitrogen-containing organic group; and the hydrolysable group is preferably a trimethylsilyl group or a tert-butyldimethylsilyl group, and particularly preferably a trimethylsilyl group), or a sulfur; $R^{25}$ represents a monovalent aliphatic or alicyclic hydrocarbon group having from 1 to 20 carbon atoms, or a monovalent aromatic hydrocarbon group having from 6 to 18 carbon atoms; $R^{27}$ represents a monovalent aliphatic or alicyclic hydrocarbon group having from 1 to 20 carbon atoms, a monovalent aromatic hydrocarbon group having from 6 to 18 carbon atoms, or a halogen atom (fluorine, chlorine, bromine, iodine); $R^{26}$ represents a monovalent aliphatic or alicyclic hydrocarbon group having from 1 to 20 carbon atoms, a monovalent aromatic hydrocarbon group having from 6 to 18 carbon atoms, or a nitrogen-containing organic group, each of which optionally has a nitrogen atom and/or a silicon atom. When p2 is 2, then $R^{26}$s may be the same or different, or may bond to each other to form a ring. $R^{28}$ represents a divalent aliphatic or alicyclic hydrocarbon group having from 1 to 20 carbon atoms, or a divalent aromatic hydrocarbon group having from 6 to 18 carbon atoms.

Further, the hydrocarbyloxysilane compound represented by the general formula (IV) is more preferably a hydrocarbyloxysilane compound represented by the following general formula (VI) or (VII).

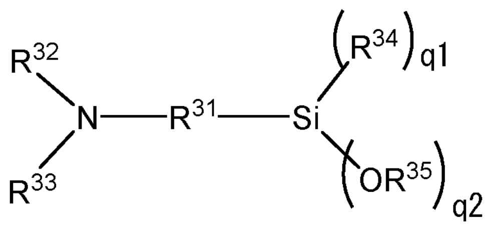

(VI)

In the formula, q1 + q2 = 3 (wherein q1 is an integer of from 0 to 2, and q2 is an integer of from 1 to 3); $R^{31}$ represents a divalent aliphatic or alicyclic hydrocarbon group having from 1 to 20 carbon atoms, or a divalent aromatic hydrocarbon group having from 6 to 18 carbon atoms; $R^{32}$ and $R^{33}$ each independently represent a hydrolysable group, a monovalent aliphatic or alicyclic hydrocarbon group having from 1 to 20 carbon atoms, or a monovalent aromatic hydrocarbon group having from 6 to 18 carbon atoms; $R^{34}$ represents a monovalent aliphatic or alicyclic hydrocarbon group having from 1 to 20 carbon atoms, or a monovalent aromatic hydrocarbon group having from 6 to 18 carbon atoms. When q1 is 2, then $R^{34}$s may be the same or different. $R^{35}$ represents a monovalent aliphatic or alicyclic hydrocarbon group having from 1 to 20 carbon atoms, or a monovalent aromatic hydrocarbon group having from 6 to 18 carbon atoms. When q2 is 2 or more, then $R^{35}$s may be the same or different.

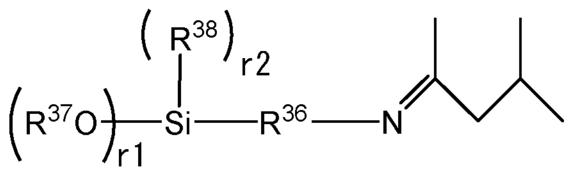

(VII)

In the formula, r1 + r2 = 3 (wherein r1 is an integer of from 1 to 3, and r2 is an integer of from 0 to 2); $R^{36}$ represents a divalent aliphatic or alicyclic hydrocarbon group having from 1 to 20 carbon atoms, or a divalent aromatic hydrocarbon group having from 6 to 18 carbon atoms; $R^{37}$ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having from 1 to 20 carbon atoms, or a monovalent aromatic hydrocarbon group having from 6 to 18 carbon atoms. When r1 is 2 or more, then $R^{37}$s may be the same or different. $R^{38}$ represents a hydrocarbyloxy group having from 1 to 20 carbon atoms, a monovalent aliphatic or alicyclic hydrocarbon group having from 1 to 20 carbon atoms, or a monovalent aromatic hydrocarbon group having from 6 to 18 carbon atoms. When r2 is 2, then $R^{38}$s may be the same or different.

It is preferable that the hydrocarbyloxysilane compound represented by the general formula (IV) has two or more nitrogen atoms represented by the following general formula (VIII) or (IX).

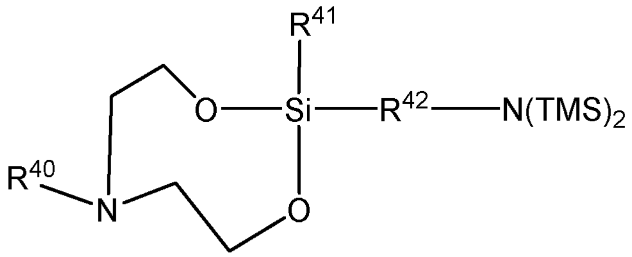

(VIII)

In the formula, TMS represents a trimethylsilyl group; $R^{40}$ represents a trimethylsilyl group, a monovalent aliphatic or alicyclic hydrocarbon group having from 1 to 20 carbon atoms, or a monovalent aromatic hydrocarbon group having from 6 to 18 carbon atoms; $R^{41}$ represents a hydrocarbyloxy group having from 1 to 20 carbon atoms, a monovalent aliphatic or alicyclic hydrocarbon group having from 1 to 20 carbon atoms, or a monovalent aromatic hydrocarbon group having from 6 to 18 carbon atoms; $R^{42}$ represents a divalent aliphatic or alicyclic hydrocarbon group having from 1 to 20 carbon atoms, or a divalent aromatic hydrocarbon group having from 6 to 18 carbon atoms.

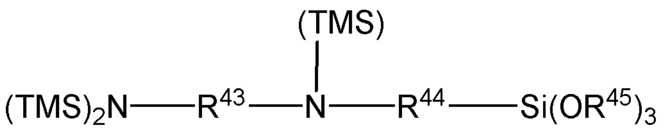

(IX)

In the formula, TMS represents a trimethylsilyl group; $R^{43}$ and $R^{44}$ each independently represent a divalent aliphatic or alicyclic hydrocarbon group having from 1 to 20 carbon atoms, or a divalent aromatic hydrocarbon group having from 6 to 18 carbon atoms; $R^{45}$ represents a monovalent aliphatic or alicyclic hydrocarbon group having from 1 to 20 carbon atoms, or a monovalent aromatic hydrocarbon group having from 6 to 18 carbon atoms, and plural $R^{45}$s may be the same or different.

Also preferably, the hydrocarbyloxysilane compound represented by the general formula (IV) is a hydrocarbyloxysilane compound represented by the following general formula (X).

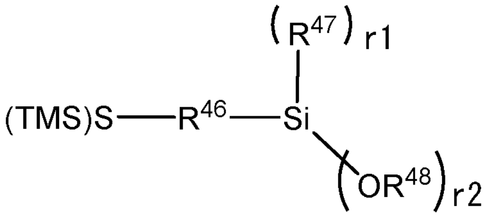

(X)

In the formula, r1 + r2 = 3 (wherein r1 is an integer of from 0 to 2, and r2 is an integer of from 1 to 3); TMS represents a trimethylsilyl group; $R^{46}$ represents a divalent aliphatic or alicyclic hydrocarbon group having from 1 to 20 carbon atoms, or a divalent aromatic hydrocarbon group having from 6 to 18 carbon atoms; $R^{47}$ and $R^{48}$ each independently represent a monovalent aliphatic or alicyclic hydrocarbon group having from 1 to 20 carbon atoms, or a monovalent aromatic hydrocarbon group having from 6 to 18 carbon atoms, and plural $R^{47}$s and $R^{48}$s may be the same or different.

Further, the hydrocarbyloxysilane compound represented by the general formula (IV) is preferably a compound represented by the following general formula (XI).

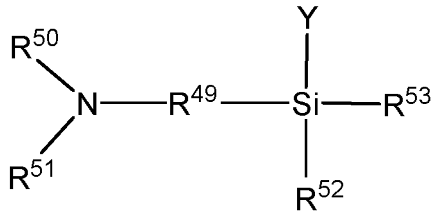

(XI)

In the formula, Y represents a halogen atom; $R^{49}$ represents a divalent aliphatic or alicyclic hydrocarbon group having from 1 to 20 carbon atoms, or a divalent aromatic hydrocarbon group having from 6 to 18 carbon atoms; $R^{50}$ and $R^{51}$ each independently represent a hydrolysable group, or a monovalent aliphatic or alicyclic hydrocarbon group having from 1 to 20 carbon atoms, or a monovalent aromatic hydrocarbon group having from 6 to 18 carbon atoms, or $R^{50}$ and $R^{51}$ bond to each other to form a divalent organic group; $R^{52}$ and $R^{53}$ each independently represent a halogen atom, a hydrocarbyloxy group, a monovalent aliphatic or alicyclic hydrocarbon group having from 1 to 20 carbon atoms, or a monovalent aromatic hydrocarbon group having from 6 to 18 carbon atoms. $R^{50}$ and $R^{51}$ each are preferably a hydrolysable group, and the hydrolysable group is preferably a trimethylsilyl group or a tert-butyldimethylsilyl group, and particularly preferably a trimethylsilyl group.

The hydrocarbyloxysilane compounds represented by the above-mentioned general formulae (IV) to (XI) are each preferably used in producing the modified conjugated diene-based polymer through anionic polymerization.

Also preferably, the hydrocarbyloxysilane compounds represented by the above-mentioned general formulae (IV) to (XI) are alkoxysilane compounds.

The modifying agent preferred when a diene-based polymer is modified by anionic polymerization is not limited and any modifying agent may be appropriately selected depending on the purpose. Examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone. These may be used singly or in combination of two or more.

The hydrocarbyloxysilane compound is preferably the amide moiety of a lithium amide compound to be used as a polymerization initiator in anionic polymerization.

The lithium amide compound is not limited and any lithium amide compound may be appropriately selected depending on the purpose. Examples thereof include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperadide, lithium ethylpropylamide, lithium ethylbutylamide, lithium ethylbenzylamide, and lithium methylphenethylamide. For example, the modifying agent constituting the amide moiety of lithium hexamethyleneimide is hexamethyleneimine, the modifying agent constituting the amide moiety of lithium pyrrolizide is pyrrolidine, and the modifying agent constituting the amide moiety of lithium piperidide is piperidine. These may be used singly or in combination of two or more.

- Modifying functional group containing an oxygen atom -

The modifying functional group containing an oxygen atom is not limited and any one may be appropriately selected depending on the purpose. Examples thereof include alkoxy groups, such as a methoxy group, an ethoxy group, an n-propoxy group, an isopropoxy group, an n-butoxy group, a sec-butoxy group, and a t-butoxy group; alkoxyalkyl groups, such as a methoxymethyl group, a methoxyethyl group, an ethoxymethyl group, and an ethoxyethyl group; alkoxyaryl groups, such as a methoxyphenyl group and an ethoxyphenyl group; alkylene oxide groups, such as an epoxy group and a tetrahydrofuranyl group; trialkylsilyloxy groups, such as a trimethylsilyloxy group, a triethylsilyloxy group, and a t-butyldimethylsilyloxy group. These may be used singly or in combination of two or more.

[Filler]

The tread rubber preferably contains 40 to 120 parts by mass of the filler relative to 100 parts by mass of the rubber component.

When the content of the filler relative to 100 parts by mass of the rubber component is 40 parts by mass or more, the wet grip performance is excellent, and when it is 120 parts by mass or less, both the abrasion resistance and the wet grip performance can be achieved at high levels. A content of the filler relative to the rubber component which is within a preferable range or within a more preferable range is advantageous in that it is possible to obtain a grip performance in which the biting property of the rubber against the road surface is balanced with the loss.

The content of the filler relative to 100 parts by mass of the rubber component is preferably from 60 to 120

parts by mass, and more preferably from 80 to 100 parts by mass.

The filler contains at least silica and may further contain carbon black or the like.

(Silica)

The content of silica in the filler is preferably 80% by mass or more.

Hereinafter, the content of silica in the filler may be referred to as "silica ratio".

When the silica ratio is 80% by mass or more, the abrasion resistance can be improved. The silica ratio is more preferably 84% by mass or more, and further preferably 87% by mass or more. In addition, from the viewpoint of balance between the wet grip performance and the abrasion resistance, the silica ratio is preferably less than 100% by mass, and more preferably 97% by mass or less.

Furthermore, from the viewpoint of increasing the abrasion resistance in the whole tire, the center rubber and the shoulder rubber preferably each contain a filler containing 80% by mass or more of silica in an amount of 70 parts by mass or more, more preferably in an amount of 80 parts by mass or more, and further preferably in an amount of 86 parts by mass or more relative to 100 parts by mass of the rubber component.

Silica is not limited and any silica may be appropriately selected according to the purpose. Examples of silica include wet silica (hydrous silicic acid), dry silica (anhydrous silicic acid), calcium silicate, and aluminum silicate. These may be used singly or in combinations of two or more.

Among them, wet silica with a minute particle size, wet silica in the form of fine powder, or dry silica is preferred, and wet silica is particularly advantageous in that it has a remarkable effect with respect to improvement of the abrasion resistance and improvement of the wet grip performance.

The nitrogen adsorption specific surface area of the silica is not limited and any value may be appropriately selected according to the purpose, but it is preferably 80 to 300 $m^2/g$.

When the nitrogen adsorption specific surface area of the silica is 80 $m^2/g$ or more, sufficient reinforcing properties can be obtained, and that of 300 $m^2/g$ or less is preferable in that deterioration in workability can be suppressed. The nitrogen adsorption specific surface area ($N_2SA$) refers to a specific surface area determined by the nitrogen adsorption method described in JIS K 6430: 2008.

Since a silica with a minute particle size has a large specific surface area, the silica with a minute particle size or a silica in the form of fine powder is preferred in that the abrasion resistance of the tread rubber can be enhanced, and among them, a wet silica with a minute particle size is preferred. The simple "silica with a minute particle size" hereinafter refers to a wet silica with a minute particle size (hydrated silicic acid with a minute particle size).

[Silica with a minute particle size]

A silica with a minute particle size refers to a wet silica (hydrated silicic acid) having a minute particle size, and is preferably a hydrated silicic acid whose ink bottle shape pore index (IB), which is calculated from a cetyltrimethylammonium bromide absorption specific surface area (CTAB) ($m^2/g$) using a mercury porosimeter, satisfies the following formula (Y):

$$IB \leq -0.36 \times CTAB + 86.8 \qquad (Y)$$

Here, the cetyltrimethylammonium bromide absorption specific surface area (CTAB) ($m^2/g$) means a value measured according to ASTM D3765-92. However, ASTM D3765-92 is a method for measuring CTAB of carbon black. In this description, therefore, a cetyltrimethylammonium bromide (hereinafter abbreviated as CE-TRAB) standard solution is separately prepared instead of IRB#3 (83.0 $m^2/g$) which is a standard, a hydrated silicic acid OT (sodium di-2-ethylhexylsulfosuccinate) solution is normalized with the standard solution, and the specific surface area ($m^2/g$) calculated from the absorption of CE-TRAB on the assumption that the absorption sectional area per CE-TRAB molecule on the hydrated silicic acid surface is 0.35 $nm^2$ is taken as the CTAB value. This is because the surface of carbon black and the surface of hydrated silicic acid are different and thus the absorptions of CE-TRAB are possibly different even on the same surface area.

The ink bottle shape pore index (IB) means a value obtained as follows. On a porous hydrated silicic acid which has openings with diameters in the range of $1.2 \times 10^5$ nm to 6 nm on the outer surface, a measurement is performed using a mercury porosimeter based on a mercury intrusion method, and the IB value is calculated from the following formula (X) with the opening diameter (M1) (nm) that provides the maximum value of the mercury intrusion while the pressure is increased from 1 to 32,000 PSI and the opening diameter (M2) (nm) that provides the maximum value of the mercury discharge while the pressure is decreased from 32,000 PSI to 1 PSI:

$$IB = M2 - M1 \qquad (X)$$

Since the measurement using a mercury porosimeter based on a mercury intrusion method is simpler than a measurement with an electron microscope which is traditionally often employed for evaluation of a pore form, and is superior in the quantitativity, the measurement is a useful method.

A hydrated silicic acid particle generally has a large number of pores having a recessed form with an opening on the outer surface thereof. Fig. 3 shows a schematic view simulating shapes of such pores in an inward-direction cross section of a hydrated silicic acid particle.

Pores having such a recessed form in an inward-direction cross section in a hydrated silicic acid particle have various shapes, and may be a pore A having a shape in which a diameter $M_a$ of the opening on the outer surface of the particle is substantially the same as a pore diameter (inner diameter) $R_a$ inside the particle, that is, which has a substantial cylindrical shape in an inward-direction cross section of the particle, or a pore B having a shape in which a diameter $M_b$ of the opening on the outer surface of the particle is narrower than a pore diameter (inner diameter) $R_b$ inside the particle, that is, which has an ink bottle shape in the inward-direction cross section of the particle. However, the pore B having an ink bottle shape in the inward-direction cross section of the particle, in which rubber molecule chains are less likely to infiltrate from the outer surface to the inside of the particle, cannot sufficiently adsorb the rubber molecule chains in mixing the hydrated silicic acid into the rubber component, possibly leading to reduced rolling resistance and also possibly leading to insufficient reinforcing properties, which makes it difficult to enhance the abrasion resistance. Accordingly, when the number of pores B having an ink bottle shape is reduced and the number of pores A having a substantially cylindrical shape in an inward-direction cross section of the particle is increased, the infiltration of rubber molecule chains can be efficiently facilitated, leading to sufficient reinforcing properties without reduction in the rolling resistance, which contributes to enhancement of the abrasion resistance.

From the above viewpoint, in the present invention, the ink bottle shape pore index (IB) as described above is defined for the silica with a minute particle size contained in the tread rubber in order to reduce the number of pores B having an ink bottle shape in an inward-direction cross section of the silica particle. As described above, when the pressure is increased in a measurement using a mercury porosimeter based on a mercury intrusion method, mercury is likely to intrude inside the pores in the pores A having a substantially cylindrical shape whose opening on the outer surface is relatively opened, but mercury is less likely to intrude inside the pores in the pores B having an ink bottle shape whose opening on the outer surface is relatively closed. On the other hand, when the pressure is lowered, mercury is likely to be discharged from the inside of the pores to the outside of the pores in the pores A having a substantially cylindrical shape, and mercury is hardly discharged from the inside of the pores to the outside of the pores in the pores B having an ink bottle shape for the same reason.

Accordingly, as shown in Fig. 4, in a measurement using a mercury porosimeter based on a mercury intrusion method, hysteresis occurs in the mercury intrusion-discharge curve C-D. Specifically, under a relatively low pressure, mercury gradually intrudes into the pores A having a substantially cylindrical shape, but at a time when the pressure reaches a certain level, mercury intrudes at a dash into other pores than the pores having a substantial cylindrical shape, including the pores B having an ink bottle shape into which mercury has unlikely to intrude until then, and the intrusion is thus rapidly increased to follow the intrusion curve C with the vertical axis being the differential mercury intrusion (-dV/d(log d)) and the horizontal axis being the opening diameter M (nm) in the pores of the hydrated silicic acid. On the other hand, when the pressure is gradually lowered after sufficient increase, although the state where mercury is unlikely to be discharged is continued under a relatively high pressure, at the time when the pressure reaches a certain level, the mercury which has intruded in the pores is discharged outside the pores at a dash and the discharge is rapidly increased to follow the discharge curve D with the vertical axis being the differential mercury discharge (-dV/d(log d)) and the horizontal axis being the opening diameter M (nm) in the pores of the hydrated silicic acid. Since mercury, once intruded in the pores, tends to be hardly discharged outside the pores during decrease of the pressure, the discharge is increased, during decrease of the pressure, at the position of the diameter (M2) which is larger than the diameter (M1) at which the intrusion is increased during increase of the pressure. The difference between the diameters (M2-M1) corresponds to IB in Fig. 4. Particularly in the pores B having an ink bottle shape, the tendency of the intruded mercury to be hardly discharged is remarkable, and although mercury intrudes into the pores B during increase of the pressure, the mercury is hardly discharged outside the pores B during decrease of the pressure.

Using the measurement method, the mercury intrusion-discharge curve C-D drawn based on the nature of the pores is used to obtain the difference IB between the opening diameter (M1) (nm) providing the maximum value of the mercury intrusion when the pressure is increased from 1 to 32,000 PSI and the opening diameter (M2) (nm) providing the maximum value of the mercury discharge when the pressure is lowered from 32,000 PSI to 1 PSI according to the formula (X) in a measurement using a mercury porosimeter based on a mercury intrusion method. The value shows an apparent difference between the diameters (length: nm), but substantially means a pore index which represents the

proportion of the pores B having an ink bottle shape present in the hydrated silicic acid. That is, the smaller the proportion of the pores B having an ink bottle shape with a sufficiently narrow opening is, the amounts of the mercury intrusion and the mercury discharge become closer to an equal value, and the difference between the opening diameter providing the maximum value of the mercury intrusion (M1) and the opening diameter providing the maximum value of the mercury discharge (M2) decreases to decrease the IB value. On the other hand, the larger the proportion of the pores B having an ink bottle shape is, the mercury discharge becomes lower than the mercury intrusion, the difference between the opening diameter providing the maximum value of the mercury intrusion (M1) and the opening diameter providing the maximum value of the mercury discharge (M2) increases to increase the IB value.

The IB also has a nature of varying depending on the CTAB value, and when the CTAB increases, the IB value tends to decrease. Accordingly, a silica with a minute particle size satisfies the formula (Y). In the silica having IB and CTAB that satisfy the formula (Y), the number of pores B having an ink bottle shape with a narrow opening can be effectively decreased to increase the proportion of the pores A having a substantially cylindrical shape. Thus, it is possible to allow rubber molecule chains to sufficiently intrude to be adsorbed, and it is possible to provide sufficient reinforcing properties and to enhance the abrasion resistance without reducing the rolling resistance in the tire.

The silica with a minute particle size preferably has a cetyltrimethylammonium bromide absorption specific surface area (CTAB) of 50 to 250 $m^2/g$, and more preferably 90 to 220 $m^2/g$. With a CTAB of 50 $m^2/g$ or more, the deterioration of the abrasion resistance of the tire can be suppressed, and with a CTAB of 250 $m^2/g$ or less, the silica with a minute particle size is easy to disperse in the rubber component, and it is possible to suppress the deterioration in the processability of the rubber and in turn to suppress the deterioration in the physical properties such as the abrasion resistance and the like.

The content of the silica with a minute particle size in the tread rubber is preferably 10 to 150 parts by mass, more preferably 30 to 100 parts by mass, and further preferably 60 to 100 parts by mass relative to 100 parts by mass of the rubber component. When the content of the silica with a minute particle size in the tread rubber is 10 parts by mass or more, the low exothermic property of the tread rubber is hardly impaired, and when it is 150 parts by mass or less, the processability of the rubber is hardly reduced and the abrasion resistance of the resulting tire can be prevented from deteriorating.

(Carbon black)

The carbon black is not limited and any carbon black may be appropriately selected according to the purpose. Examples thereof include HAF, ISAF, and SAF based on Classification by ASTM (American Society for Testing and Materials). These may be used singly or in combinations of two or more.

Among them, ISAF and SAF are preferred in that reinforcing properties can be improved.

The nitrogen adsorption specific surface area ($N_2SA$) of carbon black is not limited and any value may be appropriately selected according to the purpose, but is preferably 70 $m^2/g$ or more.

A nitrogen adsorption specific surface area ($N_2SA$) of carbon black of 70 $m^2/g$ or more is profitable in that the abrasion resistance can be favorably improved. Furthermore, the nitrogen adsorption specific surface area ($N_2SA$) means a nitrogen adsorption specific surface area defined in JIS K 6217-2: 2001.

The content of carbon black in the filler (hereinafter, the content of carbon black in the filler may be referred to as "carbon black ratio") is preferably more than 0% by mass and 20% by mass or less.

When the filler contains carbon black, the strength of the tread rubber is enhanced. A carbon black ratio of 20% by mass or less is preferred in that the deterioration in the wet grip performance can be suppressed. The carbon black ratio is more preferably 3 to 15% by mass.

[Rubber composition for tread]

The tread rubber of the present invention is obtained by vulcanizing a rubber composition (rubber composition for a tread) containing the aforementioned rubber component, filler, vulcanizing agent, and other additive components.

The components that can be contained in the tread rubber composition are described below.

[Vulcanizing agent]

The vulcanizing agent is not limited, and sulfur is usually used. Examples thereof include powdered sulfur, precipitated sulfur, colloidal sulfur, surface treated sulfur, and insoluble sulfur.

The content of the vulcanizing agent in the rubber composition for a tread is preferably from 0.1 to 10 parts by mass relative to 100 parts by mass of the rubber component. When the content of vulcanizing agent is 0.1 parts by mass or more, vulcanization can sufficiently proceed, and when the content is 10 parts by mass or less, the aging of vulcanized rubber can be suppressed.

The content of the vulcanizing agent in the rubber composition for a tread is more preferably 0.5 to 7.0 parts by mass, and further preferably 1.0 to 5.0 parts by mass relative to 100 parts by mass of the rubber component.

[Other additive components]

The rubber composition for a tread may further contain a compounding agent commonly used in the rubber industry, for example, a vulcanization accelerator, such as a zinc compound typified by zinc oxide; a vulcanization retarder; a process oil, such as an aromatic oil; a plasticizer, such as a wax; synthetic resins, such as petroleum resins, phenol resins, coal resins, and xylene resins; natural resins, such as rosin resins and terpene resins; fatty acids, such as stearic acid; antioxidants, to the extent that the effect of the present invention is not impaired.

From the viewpoint of providing elasticity to the center rubber to easily make the E' ratio less than 0.70, the center rubber preferably contains at least one selected from the group consisting of a process oil, a plasticizer, a synthetic resin, and a natural resin together with the aforementioned rubber component and filler. From the viewpoint of easily making the E' ratio less than 0.70, the content of a process oil in the center rubber is preferably 5 to 30 parts by mass relative to 100 parts by mass of the rubber component.

From the viewpoint of controlling the dynamic modulus ($E'_{Sho}$) of the shoulder rubber to easily satisfy the formula: E' ratio < 0.70, the shoulder rubber preferably also contains at least one selected from the group consisting of a process oil, a plasticizer, a synthetic resin, and a natural resin.

Examples of the antioxidant include 3C (N-isopropyl-N'-phenyl-p-phenylenediamine), 6C [N-(1,3-dimethylbutyl)-N'-phenyl-p-phenylenediamine], AW (6-ethoxy-2,2,4-trimethyl-1,2-dihydroquinoline), and a high-temperature condensation product of diphenylamine and acetone.

The rubber composition for a tread may be produced by kneading the rubber component, the filler, the vulcanizing agent, and the other additives as needed, using a kneading machine such as a Banbury mixer, a roll, or an internal mixer.

The components may be kneaded in a step, or in two or more divided steps. In kneading in two steps, for example, the maximum temperature of the first step of kneading is preferably from 140 to 160°C and the maximum temperature of the second step is preferably from 90 to 120°C.

Examples

Hereinafter the present invention will be described in more detail with reference to Examples, but the present invention is not limited to the following Examples at all and can be appropriately changed within a range not changing the gist thereof.

<Examples 1 to 11 and Comparative Examples 1 to 6>

[Synthesis of modified butadiene rubber (modified conjugated diene-based polymer) BR]

(1) Preparation of catalyst

Into a dried, nitrogen-purged, glass bottle with a rubber stopper, having a volume of 100 mL, 7.11 g of a cyclohexane solution of butadiene (15.2% by mass), 0.59 mL of a cyclohexane solution of neodymium neodecanoate (0.56 M), 10.32 mL of a toluene solution of methylaluminoxane MAO (PMAO from Tosoh Akzo) (3.23 M as aluminium concentration), and 7.77 mL of a hexane solution of diisobutylaluminium hydride (from Kanto Chemical Co., Inc.) (0.90 M) were put in this order, and ripened at room temperature for 2 minutes, and then 1.45 mL of a hexane solution of diethylaluminium chloride (from Kanto Chemical Co., Inc.) (0.95 M) was added thereto and ripened for 15 minutes at room temperature with intermittent stirring. The neodymium concentration in the thus-obtained catalyst solution was 0.011 M (mol/L).

(2) Preparation of intermediate of polymer

Into a dried, and nitrogen-purged glass bottle with a rubber stopper, having a volume of about 900 mL, a cyclohexane solution of dried and purified 1,3-butadiene and dry cyclohexane were put so as to provide 400 g of a cyclohexane solution with 12.5% by mass of 1,3-butadiene in the bottle. Next, 2.28 mL of the catalyst solution prepared in (1) above (0.025 mmol as neodymium) was put into the bottle, and polymerization was carried out in a warm water bath at 50°C for 1.0 hour.

(3) Primary modification

A hexane solution of 3-glycidoxypropyltrimethoxysilane (1.0 M) as a primary modifying agent was added so that the amount of 3-glycidoxypropyltrimethoxysilane was 23.5 molar equivalents relative to neodymium, to perform primary modification at 50°C for 60 minutes.

(4) Secondary modification and subsequent processing

Subsequently, 1.76 mL of a cyclohexane solution (1.01 M) of bis(2-ethylhexanoate)tin (BEHAS) (corresponding to 70.5 eq/Nd) as a condensation accelerator and 32 μL of ion exchange water (corresponding to 70.5 eq/Nd) were added thereto to perform processing in a warm water bath at 50°C for 1.0 hour. Then, 2 mL of an isopropanol 5% by mass solution of an antioxidant 2,2-methylene-bis(4-ethyl-6-t-butyl phenol) (NS-5) was added to the polymerization system to stop the reaction, and the reaction mixture was reprecipitated in isopropanol containing a small amount of NS-5, and then dried in a drum drier to give BR which is a modified polybutadiene rubber (modified conjugated diene-based polymer). The modified polybutadiene rubber BR had a Mooney viscosity $ML_{1+-4}$ (at 100°C) of 93 in a measurement at 100°C using an "RLM-01 type tester" manufactured by Toyo Seiki Seisaku-Sho, Ltd.

[Provision of styrene-butadiene rubber (SBR1)]

As a styrene-butadiene rubber (SBR1), product name: "TUFDENE 3835" (containing 37.5 parts by mass of oil based on 100 parts by mass of styrene butadiene rubber) manufactured by Asahi Kasei Chemicals Corporation was used.
The amounts of SBR1 in Tables 2 and 3 show the amounts of SBR1 itself except for the oil.

[Provision of styrene-butadiene rubber (SBR2)]

As a styrene-butadiene rubber (SBR2), TUFDENE E581 (containing 37.5 parts by mass of oil based on 100 parts by mass of styrene butadiene rubber) manufactured by Asahi Kasei Chemicals Corporation was used.
The amounts of SBR2 in Tables 2 and 3 show the amounts of SBR2 itself except for the oil.
The weight average molecular weights (Mw) of SBR1 and SBR2 were measured in terms of standard polystyrene by gel permeation chromatography (GPC) and Mw = 900,000 for SBR1 and Mw = 1,200,000 for SBR2 were obtained.

[Production Example 1: production of silica with a minute particle size (silica 1)]

Into a 180 L stainless reactor with jacket equipped with a stirrer, 65 L of water and 1.25 L of an aqueous sodium silicate solution ($SiO_2$ 160 g/L, $SiO_2/Na_2O$ by mole 3.3) were put and the mixture was heated to 96°C. The concentration of $Na_2O$ in the solution produced was 0.015 mol/L.
While keeping the temperature of the solution at 96°C, the same aqueous sodium silicate solution as above was added dropwise at a flow rate of 750 mL/min simultaneously with sulfuric acid (18 mol/L) at a flow rate of 33 mL/min. While adjusting the flow rates and keeping the concentration of $Na_2O$ in the reaction solution within the range of 0.005 to 0.035 mol/L, the neutralization reaction was performed. The reaction solution started to be clouded at the middle of the reaction, and the viscosity increased at 30 minutes and the solution became a gel-form. The addition was further continued and the reaction ended at 100 minutes. The silica concentration in the resulting solution was 85 g/L. The same sulfuric acid as the above was continuously added until the pH of the solution reached 3 to obtain a slurry of silicic acid. The resulting silicic acid slurry was filtered by filter press and was washed with water to yield a wet cake. Next, the wet cake was made into a slurry with an emulsifier and the slurry was dried with a spray-type drier, thereby producing a wet silica with a minute particle size (silica 1) which was hydrated silicic acid.

<Preparation of tire>

Rubber compositions for a tread to be used in the center section and shoulder sections were prepared at the mixing ratios (parts by mass) shown in Tables 1 to 3.
Using each prepared rubber composition for a tread, a tire for two-wheel vehicles (size: 180/55 ZR 17) which includes a pair of bead portions, a pair of side wall portions, and a tread portion continuing to both the side wall portions, the tread section being divided in the fire width direction into three by a center section including an equatorial plane and a pair of shoulder sections including a tread end was experimentally produced by a conventional method. Treads for the tire for two-wheel vehicles were formed of the rubber compositions for a tread.
The wet grip performance and the abrasion resistance of each rubber composition for a tread used for the treads of the tires for two-wheel vehicles were evaluated in the following manner.

<Performance evaluation>

1. Wet grip test (grip performance on wet road surface)

On the course of the wet road, the test rider carried out various running and evaluated the feeling about the wet grip performance of the tire during travel. Evaluation results are shown in Tables 2 and 3.
Indices in a relative evaluation were calculated with the evaluation result of Example 1 being taken as 7.5 out of 10 points. The greater the index is, the greater the wet grip performance of the tire is. The acceptable level was set to 7.0.

2. Abrasion resistance test

On the test course on the paved road, the test rider made the vehicle run over 3500 km at 80 km/h. Then, the amount of the remaining groove after running was measured, and the abrasion resistance of the tire was evaluated from the amount of the remaining groove. Evaluation results are shown in Tables 2 and 3.
Indices in a relative evaluation were calculated with the evaluation result of Example 1 being taken as 125.
The greater the index is, the higher the abrasion resistance is. The acceptable level was set to 100 or higher.

3. Dynamic modulus (E') and E' ratio in each tread rubber

A viscoelasticity measuring equipment manufactured by Rheometric Corporation was used to measure a dynamic modulus (E') of each tread rubber at a temperature of 0°C, a distortion of 0.1%, and a frequency of 15 Hz. The measurement results were shown in the "E' (0°C)" column of Tables 2 and 3. The unit of the "E' (0°C)" is "N/mm".
In addition, in the tread rubbers of Examples 1 to 11 and Comparative Examples 1 to 6, the E' ratios were calculated from the E' of the tread rubber at the center section and the E' of the tread rubber at the shoulder sections, and were shown in the "$E'_{CL/Sho}$ (0°C)" column in Tables 2 and 3.

Table 1

| Composition of rubber composition for tread | | | |
|---|---|---|---|
| Rubber component | Rubber components shown in Tables 2 and 3 | | Amount shown in Tables 2 and 3 (total 100 parts) |
| Filler | Silica | Silica 1 (*1) | Amount shown in Tables 2 and 3 |
| | | Silica 2 (*2) | Amount shown in Tables 2 and 3 |
| | Carbon Black (*3) | | Amount shown in Tables 2 and 3 |
| Vulcanizing agent | Sulfur | | 1.8 |
| Other additives | Silane coupling agent (*4) | | 10 mass% based on the total amount of silica mixed |
| | Zinc oxide (*5) | | 2.0 |
| | Oil (*6) | | Amount shown in Tables 2 and 3 |
| | Resin (*7) | | Amount shown in Tables 2 and 3 |
| | Stearic acid | | 1.5 |
| | Antioxidant 6C (*8) | | 2.0 |
| | Vulcanization accelerator DPG (*9) | | 3.0 |
| | Vulcanization accelerator CZ (*10) | | 2.0 |
| | | | (parts by mass) |

*1 (Silica 1): silica with a minute particle size produced in Production Example 1 [CTAB: 79 $m^2$/g, value of the formula (Y) described above: 58.00, ink bottle shape pore index (IB): 55.00]

*2 (Silica 2):, "NIPSIL AQ" manufactured by Tosoh Silica Corporation [CTAB: 165 $m^2$/g, value of the formula (Y): 27.40, ink bottle shape pore index (IB): 34.10]

*3 (Carbon black): "VULCAN 10H" manufactured by CABOT ($N_2SA$: 142 $m^2/g$, CTAB: 135 $m^2/g$, DBP: 127 mL/100 g)

*4 (Silane coupling agent): "ABC-856" manufactured by Shin-Etsu Chemical Co. Ltd.

*5 (Zinc oxide): "No. 2 zinc oxide" manufactured by Hakusuitech Co. Ltd.

*6 (Oil): A/O MIX manufactured by Sankyo Yuka Kogyo K. K.

The oil amount shown in the "oil" column in Tables 2 and 3 is the sum of the oil amount in "A/O MIX" and the oil amount in SBR1 or SBR2.

*7 (Resin): HARITACK AQ-100B manufactured by Harima Chemicals Group, Inc.
*8 (Antioxidant 6C): "ANTIGEN 6C" manufactured by Sumitomo Chemical, Co. Ltd.
*9 (Vulcanization accelerator (DPG)): "SOXINOL D" manufactured by Sumitomo Chemical Co. Ltd.
*10 (Vulcanization accelerator (CZ)): "NOCCELER CZ-G" manufactured by Ouchi Shinko Chemical Industrial Co., Ltd.

Table 2

| | | Example 1 | | Example 2 | | Example 3 | | Comparative Example 1 | | Example 4 | | Example 5 | |
|---|---|---|---|---|---|---|---|---|---|---|---|---|---|
| | | CL | Sho | CL | Sho | CL | Sho | CL | Sho | CL | Sho | CL | Sho |
| Rubber Component | BR | 30 | 15 | 30 | 15 | 30 | 15 | 30 | 15 | 30 | 15 | 30 | 15 |
| | SBR1 | | 85 | | 85 | | 85 | | 85 | 70 | 85 | 70 | 85 |
| | SBR2 (high molecular weight) | 70 | | 70 | | 70 | | 70 | | | | | |
| Filler | Carbon | 10 | 10 | 10 | 10 | 10 | 10 | 10 | 10 | 10 | 10 | 10 | 10 |
| | Silica 1 | 90 | 95 | | 95 | 100 | 95 | 110 | 95 | 90 | 95 | | 95 |
| | Silica 2 | | | 90 | | | | | | | | 90 | |
| Other components | Oil | 15 | 10 | 15 | 10 | 15 | 10 | 15 | 10 | 15 | 10 | 15 | 10 |
| | Resin | 20 | 25 | 20 | 25 | 20 | 25 | 20 | 25 | 20 | 25 | 20 | 25 |
| Physical properties | E' (0°C) | 80.3 | 144.4 | 63.3 | 144.4 | 95.3 | 144.4 | 110.3 | 144.4 | 80.3 | 144.4 | 63.3 | 144.4 |
| | $E'_{CL/Sho}$ (0°C) | 0.56 | | 0.44 | | 0.66 | | 0.76 | | 0.56 | | 0.44 | |
| | High molecular weight SBR | Present | Absent | Present | Absent | Present | Absent | Present | Absent | Absent | Absent | Absent | Absent |
| Evaluation | Wet grip performance | 7.5 | | 7.8 | | 7.2 | | 6.6 | | 7.5 | | 7.8 | |
| | Abrasion resistance | 125 | | 110 | | 130 | | 125 | | 115 | | 100 | |

(continued)

| | | Example 6 | | Example 7 | | Example 8 | | Comparative Example 2 | | Comparative Example 3 | | Comparative Example 4 | |
|---|---|---|---|---|---|---|---|---|---|---|---|---|---|
| | | CL | Sho | CL | Sho | CL | Sho | CL | Sho | CL | Sho | CL | Sho |
| Rubber Component | BR | 30 | 15 | 30 | 15 | 30 | 15 | 30 | 15 | 30 | 15 | 5 | 5 |
| | SBR1 | 70 | 85 | | 85 | 70 | 85 | 70 | 85 | 70 | 85 | | 95 |
| | SBR2 (high molecular weight) | | | 70 | | | | | | | | 95 | |
| Filler | Carbon | 10 | 10 | 10 | 10 | 10 | 10 | 10 | 10 | 10 | 10 | 10 | 10 |
| | Silica 1 | | 95 | 90 | 95 | 90 | 95 | 100 | 95 | 110 | 95 | 90 | 95 |
| | Silica 2 | 80 | | | | | | | | | | | |
| Other components | Oil | 15 | 10 | 25 | 10 | 25 | 10 | 25 | 10 | 15 | 10 | 15 | 10 |
| | Resin | 20 | 25 | 10 | 25 | 10 | 25 | 10 | 25 | 20 | 25 | 20 | 25 |
| Physical properties | E' (0°C) | 48.3 | 144.4 | 70.3 | 144.4 | 80.3 | 144.4 | 103.3 | 144.4 | 110.3 | 144.4 | 114.5 | 161.7 |
| | $E'_{CL/Sho}$ (0°C) | 0.33 | | 0.49 | | 0.56 | | 0.72 | | 0.76 | | 0.71 | |
| | High molecular weight SBR | Absent | Absent | Present | Absent | Absent | Absent | Absent | Absent | Absent | Absent | Present | Absent |
| Evaluation | Wet grip performance | 7.6 | | 7.6 | | 7.5 | | 6.8 | | 6.6 | | 6.9 | |
| | Abrasion resistance | 105 | | 120 | | 110 | | 125 | | 110 | | 85 | |

Table 3

| | | Example 9 | | Comparative Example 5 | | Comparative Example 6 | | Example 10 | | Example 11 | |
|---|---|---|---|---|---|---|---|---|---|---|---|
| | | CL | SHO | CL | SHO | CL | SHO | CL | SHO | CL | SHO |
| Rubber Component | BR | 30 | 5 | 5 | 15 | 10 | 15 | 30 | 15 | 50 | 15 |
| | SBR1 | | 95 | | 85 | | 85 | | 85 | | 85 |
| | SBR2 (high molecular weight) | 70 | | 95 | | 90 | | 70 | | 50 | |
| Filler | Carbon | 10 | 10 | 10 | 10 | 10 | 10 | 30 | 10 | 10 | 10 |
| | Silica 1 | 90 | 95 | 90 | 95 | 90 | 95 | 70 | 95 | 90 | 95 |
| | Silica 2 | | | | | | | | | | |
| Other components | Oil | 15 | 10 | 15 | 10 | 15 | 10 | 15 | 10 | 15 | 10 |
| | Resin | 20 | 25 | 20 | 25 | 20 | 25 | 20 | 25 | 20 | 25 |
| Physical properties | E' (0°C) | 63.3 | 161.7 | 114.5 | 144.4 | 102.0 | 144.4 | 48.4 | 144.4 | 24.6 | 144.4 |
| | $E'_{CL/Sho}$ (0°C) | 0.39 | | 0.79 | | 0.71 | | 0.34 | | 0.17 | |
| | High molecular weight SBR | Present | Absent | Present | Absent | Present | Absent | Present | Absent | Present | Absent |
| Evaluation | Wet grip performance | 7.7 | | 6.3 | | 6.9 | | 7.6 | | 7.0 | |
| | Abrasion resistance | 110 | | 85 | | 90 | | 115 | | 120 | |

As shown in Tables 2 and 3, it has been found that tires having a ratio ($E'_{CL/Sho}$) of the dynamic modulus E' at 0°C of the center rubber ($E'_{CL}$) to the dynamic modulus E' at 0°C of the shoulder rubber ($E'_{Sho}$) less than 0.70 (Examples 1 to 11) have superior wet grip performance while maintaining high abrasion resistance.

On the other hand, Comparative Examples 1 to 6 which had $E'_{CL/Sho}$ of 0.70 or more maintained high abrasion resistance but had an inappropriate balance between the dynamic modulus of the center rubber and that of the shoulder rubber, and thus the wet grip performance did not achieve an acceptable level.

INDUSTRIAL APPLICABILITY

The tire for two-wheel vehicles of the present invention can be suitably used for competition two-wheel vehicles, general public roadway two-wheel vehicles, an on-road two-wheel vehicles, and an off-road two-wheel vehicles.

REFERENCE SIGNS LIST

10 Tire for two-wheel vehicles
11 Tread section
12 Bead section
13 Bead core
14 Side wall section
15 Carcass layer
16 Tread rubber of center section
17 Tread rubber of shoulder section
18 Base rubber
20 Center section
22 Shoulder section
23 Equatorial plane
24 Tire tread end

**Claims**

**1.** A tire for two-wheel vehicles, comprising
a pair of bead sections,
a pair of side wall sections, and
a tread section continuing to both the side wall sections, the tread section being divided in the width direction into three by a center section including a tire equatorial plane and a pair of shoulder sections each including a tread end, wherein
a tread rubber of the center section and a tread rubber of the shoulder sections each comprise a rubber component, and satisfy the following formula (1):

$$\text{(Dynamic modulus E' at 0°C of tread rubber of center section) / (Dynamic modulus E' at 0°C of tread rubber of shoulder sections)} < 0.70 \qquad (1).$$

**2.** The tire for two-wheel vehicles according to claim 1, wherein
the tread rubber of the center section and the tread rubber of the shoulder sections each comprise a styrene-butadiene-based rubber as the rubber component, and
the weight average molecular weight of the styrene-butadiene-based rubber contained in the tread rubber of the center section is larger than the weight average molecular weight of the styrene-butadiene-based rubber contained in the tread rubber of the shoulder sections.

**3.** The tire for two-wheel vehicles according to claim 1 or 2, wherein the tread rubber of the center section and the tread rubber of the shoulder sections satisfy the following formula (2):

$$0.2 \leq (\text{Dynamic modulus E' at } 0°\text{C of tread rubber of center section}) / (\text{Dynamic modulus E' at } 0°\text{C of tread rubber of shoulder sections}) < 0.70 \quad (2).$$

**4.** The tire for two-wheel vehicles according to any one of claims 1 to 3, wherein the tread rubber of the center section and the tread rubber of the shoulder sections each comprise a modified conjugated diene-based polymer in an amount of 10% by mass or more as the rubber component.

**5.** The tire for two-wheel vehicles according to claim 4, wherein the content of the modified conjugated diene-based polymer in the tread rubber of the center section is larger than the content of the modified conjugated diene-based polymer in the tread rubber of the shoulder sections.

**6.** The tire for two-wheel vehicles according to any one of claims 1 to 5, wherein the tread rubber of the center section and the tread rubber of the shoulder sections each further comprise a filler containing 80% by mass or more of silica in an amount of 70 parts by mass or more relative to 100 parts by mass of the rubber component.

**7.** The tire for two-wheel vehicles according to any one of claims 1 to 6, wherein the dynamic modulus E' at 0°C of the tread rubber of the center section is from 40 to 120 MPa.

**8.** The tire for two-wheel vehicles according to any one of claims 2 to 7, wherein the weight average molecular weight of the styrene-butadiene-based rubber contained in the tread rubber of the center section is 1,070,000 or more.

[Fig. 1]

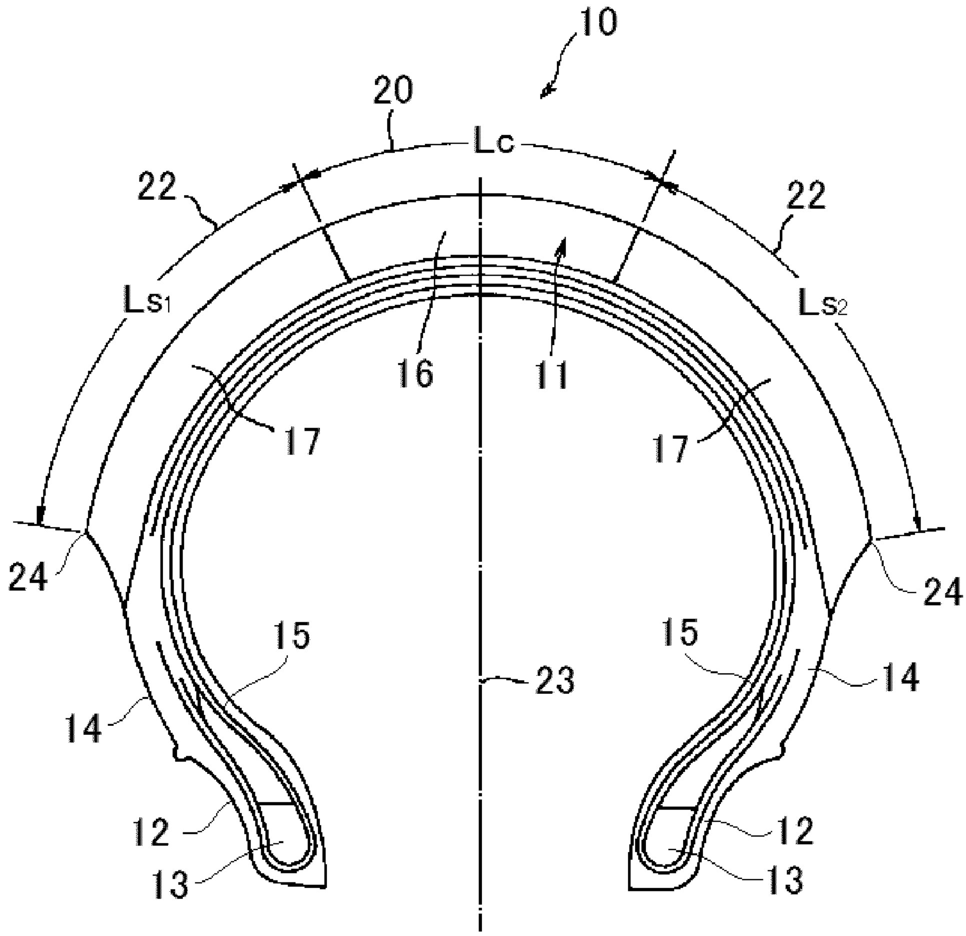

[Fig. 2]

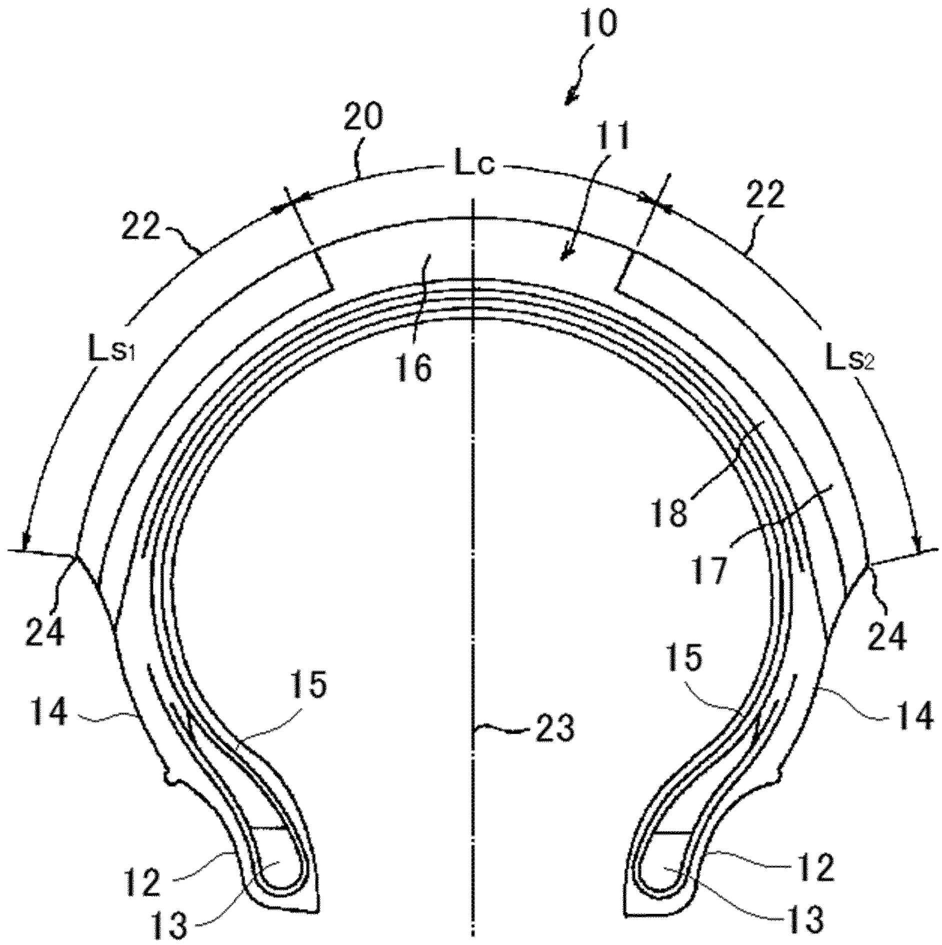
10
20
Lc
11
22
22
Ls1
Ls2
16
18
17
24
24
15
15
14
14
23
12
12
13
13

[Fig. 3]

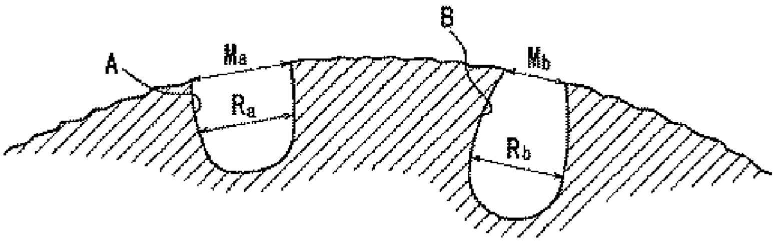
A
Ma
B
Mb
Ra
Rb

[Fig. 4]

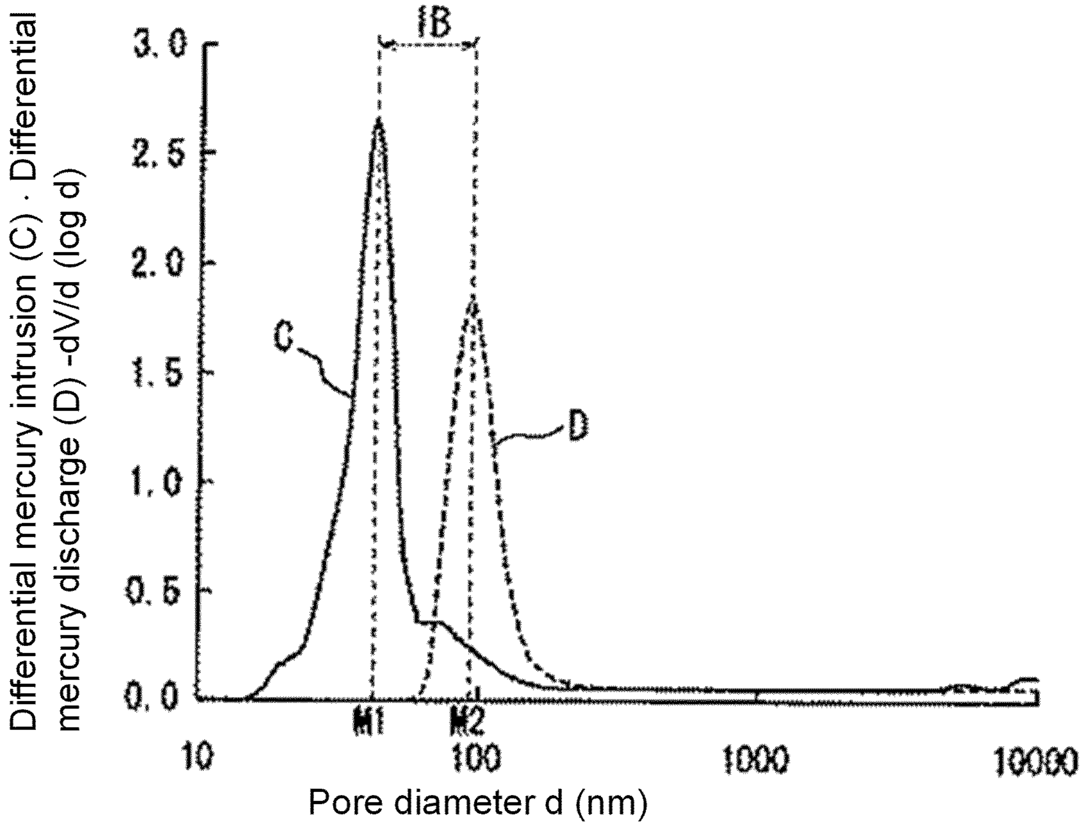

Differential mercury intrusion (C) · Differential mercury discharge (D) -dV/d (log d)
3.0
2.5
2.0
1.5
1.0
0.5
0.0
fB
C
D
M1
M2
10
100
1000
10000
Pore diameter d (nm)

**INTERNATIONAL SEARCH REPORT**

International application No.
PCT/JP2018/017441

A. CLASSIFICATION OF SUBJECT MATTER
Int.Cl. B60C11/00(2006.01)i, B60C1/00(2006.01)i, C08K3/36(2006.01)i, C08L9/06(2006.01)i, C08L15/00(2006.01)i

According to International Patent Classification (IPC) or to both national classification and IPC

B. FIELDS SEARCHED

Minimum documentation searched (classification system followed by classification symbols)
Int.Cl. B60C1/00-19/12, C08K3/00-13/08, C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-189808 A (SUMITOMO RUBBER INDUSTRIES, LTD.) 29 September 2011, claims (Family: none) | 1-8 |
| A | JP 2009-255856 A (BRIDGESTONE CORPORATION) 05 November 2009, claims (Family: none) | 1-8 |
| A | JP 2009-35228 A (SUMITOMO RUBBER INDUSTRIES, LTD.) 19 February 2009, claims & WO 2009/019831 A1 | 1-8 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 July 2018 (20.07.2018) | 31 July 2018 (31.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/017441

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-542089 A (SOCIETE DE TECHNOLOGIE MICHELIN) 27 November 2008, claims & US 2009/0229718 A1, claims & WO 2006/125766 A1 & EP 1888351 A1 & FR 2886215 A & CN 101184636 A & AT 429344 T & ES 2325556 T & BR PI0610117 A | 1-8 |
| A | JP 2000-158910 A (BRIDGESTONE CORPORATION) 13 June 2000, claims (Family: none) | 1-8 |
| A | JP 7-108805 A (BRIDGESTONE CORPORATION) 25 April 1995, claims (Family: none) | 1-8 |
| A | JP 61-27707 A (BRIDGESTONE CORPORATION) 07 February 1986, claims & AU 4480385 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006273240 A